# EUROPEAN PATENT APPLICATION

(11) **EP 2 012 564 A1**
(43) Date of publication of application: **07.01.2009**
(21) Application number: 07741892.9
(22) Date of filing: 18.04.2007
(51) Int. Cl.: H05B 41/392, G02F 1/133, G09G 3/20, G09G 3/34, G09G 3/36, H05B 41/24

(54) **BACKLIGHT CONTROLLER AND DISPLAY**

(30) Priority: 24.04.2006 JP 2006118888
(71) Applicant: Panasonic Corporation, Kadoma-shi Osaka 571-8501 (JP)
(72) Inventor: HATANO, Takahisa, Osaka-shi Osaka 540-6207 (JP); SUZUKI, Kosho, Osaka-shi Osaka 540-6207 (JP)
(74) Representative: TBK-Patent
(86) International application number: PCT/JP2007/058456
(87) International publication number: WO 2007/125804

(57) **Abstract**

A PWM generation circuit generates a PWMpulse signal having a variable duty ratio in order to control the luminance of a backlight. An edge detection circuit outputs a leading edge signal in response to the rise of the PWM pulse signal generated by the PWM generation circuit. A set value pulse generation circuit generates a set width pulse signal in response to the rise of the leading edge signal. The pulse width of the set width pulse signal is set so as to be larger than the minimum PWM pulse width. An OR gate calculates the logical sum of the set width pulse signal and the PWM pulse signal. An inverter circuit feeds a driving signal to a backlight on the basis of an output signal of the OR gate.

## Description

### [Technical Field]

The present invention relates to a backlight control device that controls the luminance of a backlight and a display apparatus including the same.

### [Background Art]

Generally in video equipment using liquid crystals, for example, liquid crystal televisions or liquid crystal display apparatuses, images are displayed by light emission of backlights composed of cold-cathode tubes. Inverters are used so as to generate driving signals for controlling and driving the backlights.

Generally in order to control the luminances of backlights, there are current or voltage dimming systems for changing input DC voltages or input DC currents of inverters to change currents flowing in cold-cathode tubes and PWM dimming (burst dimming) systems for controlling light emission and stop in oscillation frequencies by PWM (Pulse Width Modulation) pulses.

The current or voltage dimming systems have advantages in that noises (audio sounds) generated from the inverters are small and stable but have disadvantages in that the dimming ranges are narrow.

On the other hand, the PWM dimming systems have advantages in that the dimming ranges are wide and are used in the functions of users adjusting the backlights, for example (see, for example, Patent Document 1).
[Patent Document 1] JP 11-126696 A

### [Disclosure of the Invention]

### [Problems to be Solved by the Invention]

In recent years, in display apparatuses having liquid crystal display panels, for example, liquid crystal televisions and liquid crystal display apparatuses, video signal processing systems are also composed of LSIs (Large Scale Integrated Circuits). Furthermore, systems for scaling, contour correction, gamma correction, and so on required to display images on the liquid crystal display panels have been realized by one-chip LSIs.

Such LSIs contain various types of peripheral circuits in order to exhibit cost merits and also contain PWM generation circuits that generate PWM pulse signals for driving inverters.

However, many of general-purpose PWM generation circuits constructed as one-chip LSIs have simple configurations, and may not include limiters that limit the duty ratios of PWMpulse signals as hardware in many cases.

On the other hand, there are many inverters that are forcedly shut down when the duty ratios of the PWM pulse signals are not more than certain values.

In normal use states, microcomputers and the like can also control the duty ratios such that the pulse widths of the PWM pulse signals satisfy minimum pulse widths in which the inverters are not shut down (hereinafter referred to as minimum PWM pulse widths).

However, in transition states where loads are applied to the microcomputers as at the time when the power is applied or the time when an input signal is switched, for example, it is necessary to consider the loads applied to the microcomputers in control sequences of the microcomputers. Therefore, design conditions become strict in order that the pulse widths of the PWM pulse signals are always not less than the minimum PWM pulse widths by controlling the microcomputers.

### [Means for Solving the Problems]

An obj ect of the present invention is to provide a backlight control device capable of operating an inverter in a stable state without shutting down the inverter in a simple configuration and a display apparatus including the same.
(1) According to an aspect of the present invention, a backlight control device that controls the luminance of a backlight includes an inverter that drives the backlight in response to a dimming pulse signal, a first pulse generator that generates a first pulse signal having a variable duty ratio to control the luminance of the backlight, and a dimming pulse generator that outputs the dimming pulse signal to the inverter on the basis of a first pulse signal generated by the first pulse generator, in which the inverter is operable when the dimming pulse signal has a pulse width that is not less than a predetermined minimum pulse width, and the dimming pulse generator outputs the first pulse signal generated by the first pulse generator as the dimming pulse signal to the inverter when the pulse width of the first pulse signal generated by the first pulse generator is not less than the minimum pulse width, while outputting a second pulse signal having a pulse width that is not less than the minimum pulse width as the dimming pulse signal to the inverter when the pulse width of the first pulse signal generated by the first pulse generator is less than the minimum pulse width.
   In the backlight control device, the first pulse generator generates the first pulse signal having the variable duty ratio in order to control the luminance of the backlight, the dimming pulse generator outputs the dimming pulse signal to the inverter on the basis of the first pulse signal, and the inverter drives the backlight in response to the dimming pulse signal.
   In this case, the inverter is operable when the dimming pulse signal has the pulse width that is not less than the predetermined minimum pulse width. When the pulse width of the first pulse signal is not less than the minimum pulse width, the dimming pulse generator outputs the first pulse signal as the dimming pulse signal to the inverter. On the other hand, when the pulse width of the first pulse signal is less than the minimum pulse width, the dimming pulse generator outputs the second pulse signal having the pulse width that is not less than the minimum pulse width as the dimming pulse signal to the inverter.
   This causes the dimming pulse signal having the pulse width that is more than the minimum pulse width to be always fed to the inverter. Therefore, the inverter can be operated in a stable state without being shut down in a simple configuration.
(2) The dimming pulse generator may include a second pulse generator that generates the second pulse signal in response to the first pulse signal generated by the first pulse generator, and a logical circuit that outputs the first pulse signal generated by the first pulse generator as the dimming pulse signal to the inverter when the pulse width of the first pulse signal generated by the first pulse generator is not less than the minimum pulse width, while outputting the second pulse signal generated by the second pulse generator as the dimming pulse signal to the inverter when the pulse width of the first pulse signal generated by the first pulse generator is less than the minimum pulse width.
   In this case, the second pulse generator generates the second pulse signal in response to the first pulse signal. When the pulse width of the first pulse signal is not less than the minimum pulse width, the logical circuit outputs the first pulse signal as the dimming pulse signal to the inverter. When the pulse width of the first pulse signal is less than the minimum pulse width, the logical circuit outputs the second pulse signal as the dimming pulse signal to the inverter.
   This causes the dimming pulse signal having the pulse width that is more than the minimum pulse width to be always fed to the inverter. Therefore, the inverter can be operated in a stable state without being shut down in a simpler configuration.
(3) The second pulse generator may further include an edge detector that detects an edge of the first pulse signal generated by the first pulse generator, and the second pulse generator may generate the second pulse signal in response to the detection by the edge detector.
   In this case, the edge detector detects the edge of the first pulse signal, and the second pulse generator generates the second pulse signal in response to the detection of the edge. This allows the second pulse signal that is synchronized with the edge of the first pulse signal to be generated in a simple configuration.
(4) The dimming pulse generator may output a signal having a duty ratio of 100 % as the dimming pulse signal to the inverter within a predetermined time period elapsed from the time when the power is applied.
   In this case, the duty ratio of the dimming pulse signal is forcedly set to 100 % in the predetermined time period elapsed from the time when the power is applied. Therefore, the pulse width of the dimming pulse signal outputted to the inverter is prevented from being smaller than the minimum pulse width. As a result, the inverter can be reliably prevented from being shut down when the power is applied.
(5) The backlight control device may further include a controller that controls ON/OFF of the supply of the power to the inverter, in which the dimming pulse generator may include a second pulse generator that generates a second pulse signal having a pulse width that is not less than the minimum pulse width in response to the first pulse signal generated by the first pulse generator, a first logical circuit that outputs the first pulse signal generated by the first pulse generator when the pulse width of the first pulse signal generated by the first pulse generator is not less than the minimum pulse width, while outputting the second pulse signal generated by the second pulse generator when the pulse width of the first pulse signal generated by the first pulse generator is less than the minimum pulse width, a third pulse generator that generates an expanded pulse signal having a duty ratio of 100 % within a predetermined time period elapsed from the time when the controller turns the supply of the power on, and a second logical circuit that outputs the expanded pulse signal generated by the third pulse generator as the dimming pulse signal to the inverter within the predetermined time period, while outputting an output signal of the first logical circuit as the dimming pulse signal to the inverter after an elapse of the predetermined time period.
   In this case, the second pulse generator generates the second pulse signal in response to the first pulse signal. When the pulse width of the first pulse signal is not less than the minimum pulse width, the first logical circuit outputs the first pulse signal. When the pulse width of the first pulse signal is less than the minimum pulse width, the first logical circuit outputs the second pulse signal. The third pulse generator generates the expanded pulse signal having a duty ratio of 100 % within the predetermined time period elapsed from the time when the controller turns the supply of the power on. Within the predetermined time period, the second logical circuit outputs the expanded pulse signal as the dimming pulse signal to the inverter. After an elapse of the predetermined time period, the second logical circuit outputs the output signal of the first logical circuit as the dimming pulse signal to the inverter.
   This causes the duty ratio of the dimming pulse signal to be forcedly set to 100 % within the predetermined time period elapsed from the time when the power is applied. Therefore, the pulse width of the dimming pulse signal outputted to the inverter is prevented from being smaller than the minimum pulse width. As a result, the inverter can be reliably prevented from being shut down when the power is applied in a simple configuration.
(6) The backlight may include a cold-cathode tube, and the backlight control device may further include a controller that controls the pulse width of the second pulse signal generated by the dimming pulse generator on the basis of a current in the cold-cathode tube in the backlight.
   In this case, the controller controls the pulse width of the second pulse signal on the basis of the current in the cold-cathode tube in the backlight. This causes the dimming pulse signal having the pulse width that is more than the minimum pulse width to be always outputted to the inverter even when the minimum pulse width of the inverter is changed by the current in the cold-cathode tube in the backlight. As a result, the inverter can be operated in a stable state without being shut down even when the luminance of the backlight is changed.
(7) The dimming pulse generator may include a second pulse generator that generates the second pulse signal in response to the first pulse signal generated by the first pulse generator, and a logical circuit that outputs the first pulse signal generated by the first pulse generator as the dimming pulse signal to the inverter when the pulse width of the first pulse signal generated by the first pulse generator is not less than the minimum pulse width, while outputting the second pulse signal generated by the second pulse generator as the dimming pulse signal to the inverter when the pulse width of the first pulse signal generated by the first pulse generator is less than the minimum pulse width, in which the controller may control the pulse width of the second pulse signal generated by the second pulse generator on the basis of the current in the cold-cathode tube in the backlight.
   In this case, the second pulse generator generates the second pulse signal in response to the first pulse signal. When the pulse width of the first pulse signal is not less than the minimum pulse width, the logical circuit outputs the first pulse signal as the dimming pulse signal to the inverter. When the pulse width of the first pulse signal is less than the minimum pulse width, the logical circuit outputs the second pulse signal as the dimming pulse signal to the inverter. Here, the controller controls the pulse width of the second pulse signal on the basis of the current in the cold-cathode tube in the backlight.
   This causes the dimming pulse signal having the pulse width that is more than the minimum pulse width to be always outputted to the inverter even when the minimum pulse width of the inverter is changed by the current in the cold-cathode tube in the backlight. As a result, the inverter can be operated in a stable state without being shut down in a simple configuration even if the luminance of the backlight is changed.
(8) The backlight control device may further include a storage that stores the minimum pulse width, and a controller that gradually reduces the duty ratio of the dimming pulse signal generated by the dimming pulse generator, and causes the storage to store as the minimum pulse width a pulse width corresponding to a duty ratio that is larger by a predetermined value than a duty ratio in a case where the inverter is shut down, in which the dimming pulse generator may output the second pulse signal having the minimum pulse width stored in the storage as the dimming pulse signal when the pulse width of the first pulse signal generated by the first pulse generator is less than the minimum pulse width.
   In this case, the controller gradually reduces the duty ratio of the dimming pulse signal, and causes the storage to store as the minimum pulse width the pulse width corresponding to the duty ratio that is larger by the predetermined value than the duty ratio in the case where the inverter is shut down. When the pulse width of the first pulse signal is less than the minimum pulse width, the dimming pulse generator outputs the second pulse signal having the minimum pulse width stored in the storage as the dimming pulse signal.
   In such a way, even when there is a variation (an individual difference) among the minimum pulse widths of inverters, the dimming pulse signal having the smaller pulse width while satisfying for each of the inverters conditions under which the pulse width is more than the minimum pulse width is outputted to the inverter. This allows a variable range of the luminance of the backlight to be made wider without depending on a variation (an individual difference) among the characteristics of the inverters. Therefore, the inverter can be operated in a stable state without being shut down, and the luminance of the backlight can be adjusted in a wide range.
(9) The backlight control device may further include a voltage detector that detects a voltage in the inverter, in which the controller may cause the storage to store as the minimum pulse width a pulse width corresponding to a duty ratio that is larger by a predetermined value than a duty ratio in a case where the voltage detector detects the reduction in the voltage, and the dimming pulse generator may include a second pulse generator that generates a second pulse signal having the minimum pulse width stored in the storage in response to the first pulse signal generated by the first pulse generator, and a logical circuit that outputs the first pulse signal generated by the first pulse generator as the dimming pulse signal to the inverter when the pulse width of the first pulse signal generated by the first pulse generator is not less than the minimum pulse width, while outputting the second pulse signal generated by the second pulse generator as the dimming pulse signal to the inverter when the pulse width of the first pulse signal generated by the first pulse generator is less than the minimum pulse width.
   In this case, the controller causes the storage to store as the minimum pulse width the pulse width corresponding to the duty ratio that is larger by the predetermined value than the duty ratio in the case where the voltage detector detects the reduction in the voltage. The second pulse generator generates the second pulse signal having the minimum pulse width stored in the storage in response to the first pulse signal. When the pulse width of the first pulse signal is not less than the minimum pulse width, the logical circuit outputs the first pulse signal as the dimming pulse signal to the inverter. When the pulse width of the first pulse signal is less than the minimum pulse width, the logical circuit outputs the second pulse signal as the dimming pulse signal to the inverter. In such a way, even when there is a difference (an individual difference) among the minimum pulse widths of inverters, the dimming pulse signal having the smaller pulse width while satisfying for each of the inverters conditions under which the pulse width is more than the minimum pulse width is outputted to the inverter. This allows a variable range of the luminance of the backlight to be made wider without depending on a variation (an individual difference) among the characteristics of the inverters. Therefore, the inverter can be operated in a stable state without being shut down in a simple configuration, and the luminance of the backlight can be adjusted in a wide range.
(10) According to another aspect of the present invention, a display apparatus includes a signal processing circuit that converts an inputted video signal into a predetermined format, a display panel that displays as an image a video signal obtained by the signal processing circuit, a backlight provided on a back of the display panel, and a backlight control device that controls the luminance of the backlight, in which the backlight control device may include an inverter that drives the backlight in response to a dimming pulse signal, a first pulse generator that generates a first pulse signal having a variable duty ratio to control the luminance of the backlight, and a dimming pulse generator that outputs the dimming pulse signal to the inverter on the basis of the first pulse signal generated by the first pulse generator, the inverter is operable when the dimming pulse signal has a pulse width that is not less than a predeterminedminimumpulsewidth, and the dimming pulse generator outputs the first pulse signal generated by the first pulse generator as the dimming pulse signal to the inverter when the pulse width of the first pulse signal generated by the first pulse generator is not less than the minimum pulse width, while outputting a second pulse signal having a pulse width that is not less than the minimum pulse width as the dimming pulse signal to the inverter when the pulse width of the first pulse signal generated by the first pulse generator is less than the minimum pulse width.
   In the display apparatus, the signal processing circuit converts the inputted video signal into the predetermined format. The display panel displays the image based on the video signal while being irradiated with light from the back thereof by the backlight. The backlight control device adjusts the luminance of the backlight.
   In the backlight control device, the first pulse generator generates the first pulse signal having the variable duty ratio in order to control the luminance of the backlight, the dimming pulse generator outputs the dimming pulse signal to the inverter on the basis of the first pulse signal, and the inverter drives the backlight in response to the dimming pulse signal.
   In this case, the inverter is operable when the dimming pulse signal has the pulse width that is not less than the predetermined minimum pulse width. When the pulse width of the first pulse signal is not less than the minimum pulse width, the dimming pulse generator outputs the first pulse signal as the dimming pulse signal to the inverter. When the pulse width of the first pulse signal is less than the minimum pulse width, the dimming pulse generator outputs the second pulse signal having the pulse width that is not less than the minimum pulse width as the dimming pulse signal.
   This causes the dimming pulse signal having the pulse width that is more than the minimum pulse width to be always fed to the inverter. Therefore, the inverter can be operated in a stable state without being shut down in a simple configuration.
(11) The display panel may include a liquid crystal display panel. In this case, the liquid crystal display panel displays the image based on the video signal while being irradiated with light from the back thereof by the backlight. The backlight control device adjusts the luminance of the backlight.

### [Effects of the Invention]

According to the present invention, a dimming pulse signal having a pulse width that is more than the minimum pulse width is always fed to an inverter. Therefore, the inverter can be operated in a stable state without being shut down in a simple configuration.

### [Brief Description of the Drawings]

[FIG. 1] FIG. 1 is a block diagram showing the configuration of a display apparatusincluding a backlight control device according to a first embodiment of the present invention.
[FIG. 2] FIG. 2 is a timing chart of respective signals in units in the backlight control device shown in Fig. 1.
[FIG. 3] FIG. 3 is a block diagram showing the configuration of a display apparatus including a back light control device according to a second embodiment of the present invention.
[FIG. 4] FIG. 4 is a timing chart of respective signals in units in the backlight control device shown in Fig. 3.
[FIG. 5] FIG. 5 is a block diagram showing the configuration of a display apparatus including a backlight control device according to a third embodiment of the present invention.
[FIG. 6] FIG. 6 is a block diagram showing an example of the configuration an inverter circuit.
[FIG. 7] FIG. 7 is a timing chart of respective signals in units in the backlight control device shown in Fig. 3.
[FIG. 8] Fig. 8 is a diagram showing the relationship between a tube current detected value and the pulse width of a set width pulse signal.
[FIG. 9] FIG. 9 is a block diagram showing the configuration of a display apparatus including a backlight control device according to a fourth embodiment of the present invention.

### [Best Mode for Carrying out the Invention]

The embodiments of the present invention will be described in detail referring to the drawings. The embodiments below describe display apparatuses including backlight control devices.

### (1) First Embodiment

### (1-1) Configuration of backlight control device

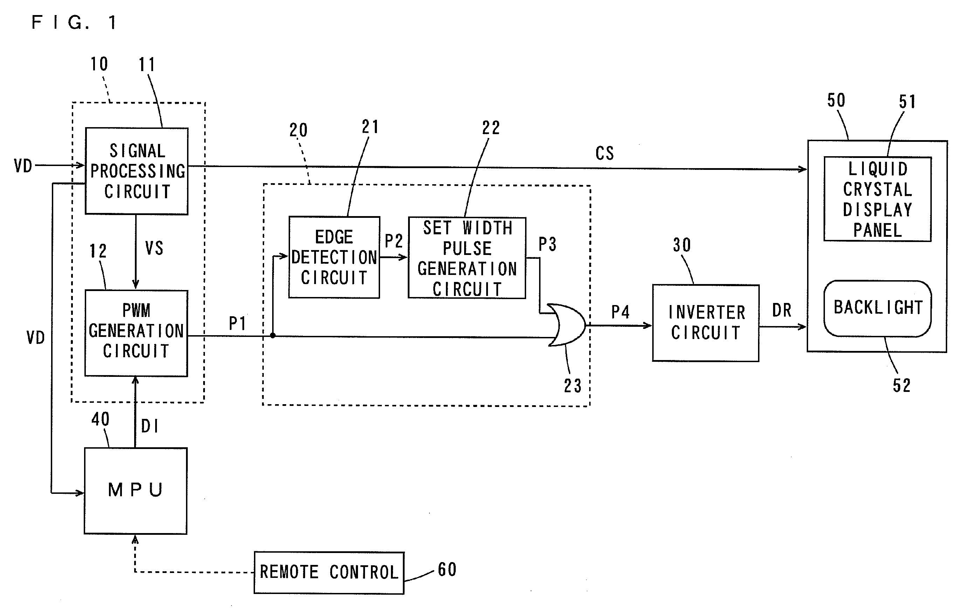

Fig. 1 is a block diagram showing the configuration of a display apparatus including a backlight control device according to a first embodiment of the present invention.

In Fig. 1, the display apparatus includes a liquid crystal control circuit 10, a duty control circuit 20, an inverter circuit 30, anMPU (Microprocessing Unit) 40, a liquid crystal panel module 50, and a remote control 60. The liquid crystal control circuit 10, the duty control circuit 20, the inverter circuit 30, the MPU 40, and the remote control 60 constitute a backlight control device.

The liquid crystal control circuit 10 includes a signal processing circuit 11 and a PWM (Pulse Width Modulation) generation circuit 12, and is composed of an LSI (Large Scale Integrated Circuit).

The duty control circuit 20 includes an edge detection circuit 21, a set width pulse generation circuit 22, and an OR gate 23. The liquid crystal panel module 50 includes a liquid crystal display panel 51 and a backlight 52. The backlight 52 is composed of a cold-cathode tube, for example, and is arranged on a back surface of the liquid crystal display panel 51.

A video signal VD is inputted to the signal processing circuit 11. The signal processing circuit 11 converts the video signal VD into an RGB signal CS adapted to the liquid crystal display panel 51 while separating a vertical synchronizing signal VS and a horizontal synchronizing signal (not shown) from the video signal VD.

The RGB signal CS obtained by the signal processing circuit 11 is fed to the liquid crystal display panel 51. Thus, an image is displayed on the liquid crystal display panel 51 on the basis of the RGB signal CS.

The vertical synchronizing signal VS separated by the signal processing circuit 11 is fed to the PWM generation circuit 12. The PWM generation circuit 12 generates a PWM (Pulse Width Modulation) pulse signal P1 that is synchronized with the vertical synchronizing signal VS. The PWM generation circuit 12 generates the PWM pulse signal P1 having a frequency that is an integral multiple of a vertical synchronization frequency (vertical scanning frequency).

The video signal VD is fed to the MPU 40 from the signal processing circuit 11. The MPU 40 feeds a duty designation signal DI to the PWM generation circuit 12 on the basis of the video signal VD or a command from the remote control 60. The duty designation signal DI designates the duty ratio of the PWM pulse signal P1 generated by the PWM generation circuit 12.

The edge detection circuit 21 outputs a leading edge signal P2 in response to the rise of the PWM pulse signal P1 generated by the PWM generation circuit 12.

The set width pulse generation circuit 22 generates a set width pulse signal P3 in response to the rise of the leading edge signal P2 outputted from the edge detection circuit 21. The set width pulse signal P3 has a predetermined pulse width, described later.

The OR gate 23 calculates the logical sum of the set width pulse signal P3 generated by the set width pulse generation circuit 22 and the PWM pulse signal P1 generated by the PWM generation circuit 12. An output signal of the OR gate 23 is fed to the inverter circuit 30 as a PWM pulse signal P4.

The inverter circuit 30 feeds a driving signal DR to the backlight 52 on the basis of the PWM pulse signal P4 fed from the OR gate 23. This causes the backlight 52 to be driven. The luminance of the backlight 52 is adjusted by controlling the duty ratio of the PWM pulse signal P4.

The pulse width of the set width pulse signal P3 generated by the set width pulse generation circuit 22 will be then described. The inverter circuit 30 is forcedly shut down when the pulse width of the inputted PWM pulse signal P4 is not more than a predetermined value. Thus, the driving signal DR is not outputted from the inverter circuit 30. That is, the voltage level of the driving signal DR reaches zero.

A minimum pulse width in which the inverter circuit 30 is not shut down is hereinafter referred to as a minimum PWM pulse width. Here, the pulse width of the set width pulse signal P3 generated by the set width pulse generation circuit 22 is set so as to be larger than the minimum PWM pulse width. It is preferable that the pulse width of the set width pulse signal P3 is set so as to be larger than the minimum PWM pulse width by a predetermined value (corresponding to a margin).

Furthermore, a minimum duty ratio in which the inverter circuit 30 is not shut down is referred to as a minimum duty ratio. That is, the duty ratio of the set width pulse signal P3 generated by the set width pulse generation circuit 22 is set so as to be larger than the minimum duty ratio.

### (1-2) Operation of backlight control device

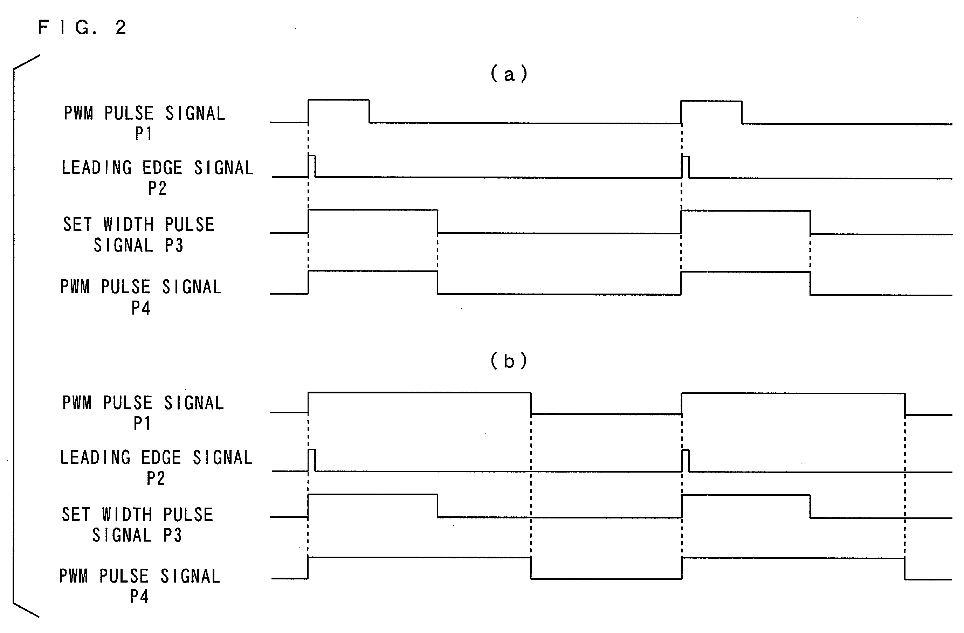

Referring now to Fig. 2, description is made of the specific operation of the backlight control device shown in Fig. 1. Fig. 2 is a timing chart of respective signals in units in the backlight control device shown in Fig. 1.

Fig. 2 (a) shows the PWM pulse signal P1, the leading edge signal P2, the set width pulse signal P3, and the PWM pulse signal P4 in a case where the pulse width of the PWM pulse signal P1 is less than the minimum PWM pulse width. Fig. 2 (b) shows the PWM pulse signal P1, the leading edge signal P2, the set width pulse signal P3, and the PWM pulse signal P4 in a case where the pulse width of the PWM pulse signal P1 is not less than the minimum PWM pulse width. The horizontal axis shown in Fig. 2 indicates time.

The video signal VD shown in Fig. 1 is composed of a composite signal, for example, or is composed of a luminance signal and a color difference signal. As described above, the signal processing circuit 11 converts the video signal VD into an RGB signal adapted to the liquid crystal display panel 51. In this case, the signal processing circuit 11 subjects the video signal VD to scaling processing, for example. In the scaling processing, the video signal VD is converted such that the number of pixels in its display region is adaptable to the resolution of the liquid crystal display panel 51. In order to convert the image quality based on the video signal VD so as to suit a user's preference by correcting the characteristics of the liquid crystal display panel 51, the video signal VD is subjected to contour correction, gamma correction, white balance adjustment, and so on.

The PWM generation circuit 12 generates the PWM pulse signal P1 in synchronization with the vertical synchronizing signal VS.

As shown in Fig. 2, the edge detection circuit 21 outputs the leading edge signal P2 in response to the rise of the PWM pulse signal P1. The leading edge signal P2 has a pulse having a predetermined width that rises in synchronization with the rise of the PWM pulse signal P1.

Furthermore, the set width pulse generation circuit 22 generates the set width pulse signal P3 in response to the rise of the leading edge signal P2. The set width pulse signal P3 has a pulse having a width set as described above.

The OR gate 23 calculates the logical sum of the PWM pulse signal P1 and the frequency-division pulse signal P2.

When the pulse width of the PWM pulse signal P1 is less than the minimum PWM pulse width, as shown in Fig. 2 (a) , therefore, the set width pulse signal P3 is outputted from the OR gate 23 as the PWM pulse signal P4. That is, when the duty ratio of the PWM pulse signal P1 is less than the minimum duty ratio, the set width pulse signal P3 is outputted from the OR gate 23 as the PWM pulse signal P4.

Furthermore, when the pulse width of the PWM pulse signal P1 is not less than the minimum PWM pulse width, as shown in Fig. 2 (b), the PWM pulse signal P1 is outputted from the OR gate 23 as the PWM pulse signal P4. That is, when the duty ratio of the PWM pulse signal P1 is not less than the minimum duty ratio, the set width pulse signal P3 is outputted from the OR gate 23 as the PWM pulse signal P4.

### (1-3) Effect of first embodiment

In the present embodiment, the PWM pulse signal P4 having a pulse width that is more than the minimum PWM pulse width and having a duty ratio that is more than the minimum duty ratio is always fed to the inverter circuit 30.

Even in a transition state such as the time when the power is applied or the time when an input video signal is switched, therefore, the pulse width of the PWM pulse signal P4 fed to the inverter circuit 30 is prevented from being smaller than the minimum PWM pulse width. As a result, the inverter circuit 30 can be operated in a stable state without being shut down in a simple configuration.

### (2) Second Embodiment

### (2-1) Configuration of backlight control device

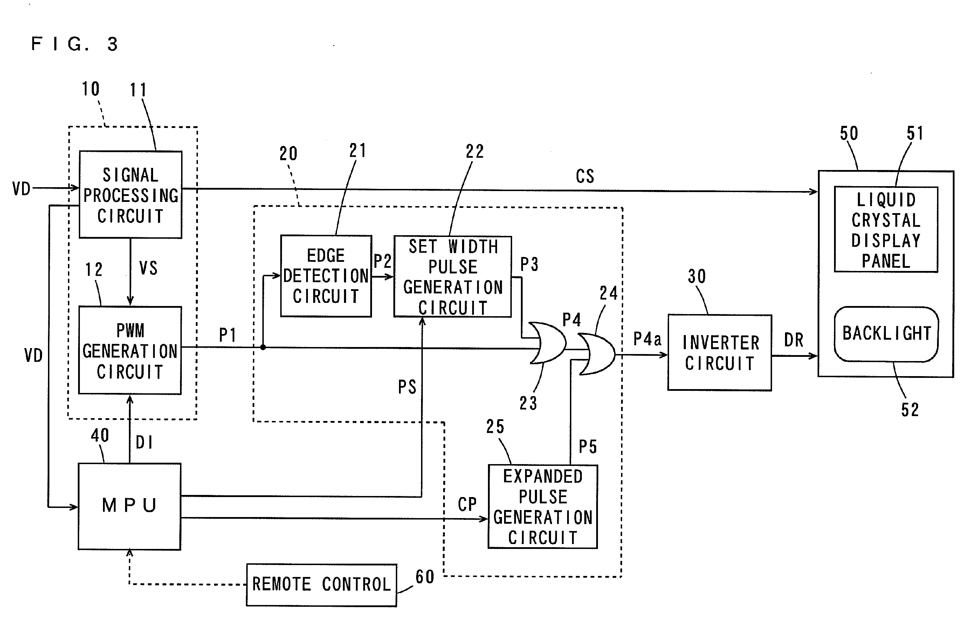

Fig. 3 is a block diagram showing the configuration of a display apparatus including a backlight control device according to a second embodiment of the present invention.

The backlight control device shown in Fig. 3 differs from the backlight control device shown in Fig. 1 in that a duty control circuit 20 further includes an OR gate 24 and an expanded pulse generation circuit 25.

The power to the backlight control device is applied by the operation of a remote control 60. An MPU 40 feeds a power-on control signal CP to the expanded pulse generation circuit 25 when the power to the backlight control device is applied and feeds a pulse width set signal PS to a set width pulse generation circuit 22, to set the pulse width of a set width pulse signal P3. The expanded pulse generation circuit 25 generates an expanded pulse signal P5 having a duty ratio of 100 % in response to the power-on control signal CP fed from the MPU 40.

The OR gate 24 calculates the logical sum of a PWM pulse signal P4 outputted from an OR gate 23 and the expanded pulse signal P5 generated by the expanded pulse generation circuit 25. An output signal of the OR gate 24 is fed to an inverter circuit 30 as a PWM pulse signal P4a.

The configuration of other units in the backlight control device shown in Fig. 3 is the same as the configuration of the corresponding units in the backlight control device shown in Fig. 1.

### (2-2) Operation of backlight control device

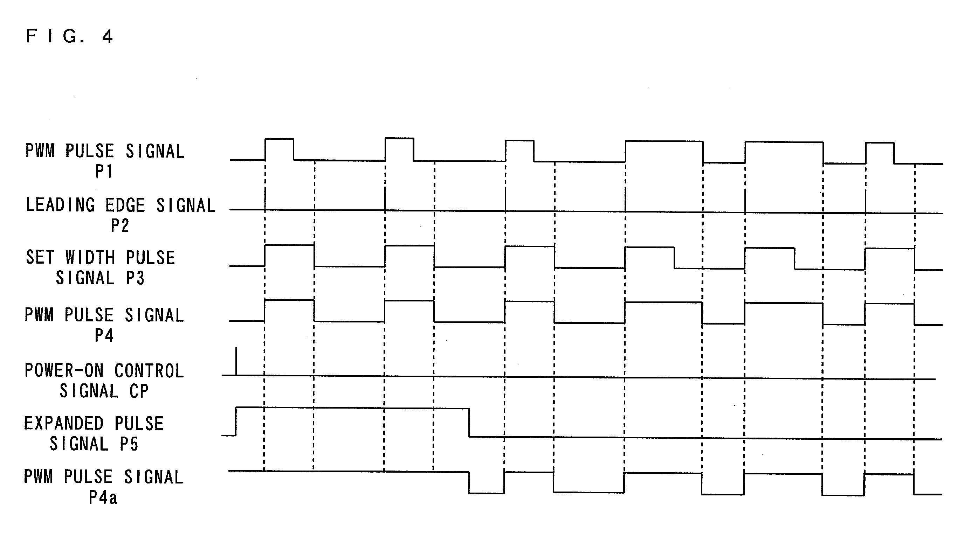

Fig. 4 is a timing chart of respective signals in the units in the backlight control device shown in Fig. 3. Fig. 4 shows a PWM pulse signal P1, a leading edge signal P2, the set width pulse signal P3, the PWM pulse signal P4, the power-on control signal CP, the expanded pulse signal P5, and the PWM pulse signal P4a during and after the application of the power. The horizontal axis shown in Fig. 4 indicates time.

In Fig. 4, the PWM pulse signal P1, the leading edge signal P2, the set width pulse signal P3, and the PWM pulse signal P4 are respectively the same as the corresponding signals shown in Fig. 2.

When the power to the backlight control device is applied by the operation of the remote control 60, a pulse is generated in the power-on control signal CP. The expanded pulse signal P5 rises to a high level for a longer time period than one period of the PWM pulse signal P1 in response to the pulse in the power-on control signal CP. A time period during which the expanded pulse signal P5 is at a high level is set to a time period longer than a time period required for the MPU 40 to set the pulse width of the set width pulse signal P3.

In the time period during which the expanded pulse signal P5 is at a high level, the PWM pulse signal P4a at a high level is outputted from the OR gate 24. In a time period during which the expanded pulse signal P5 is at a low level, the PWM pulse signal P4 is outputted as the PWM pulse signal P4a from the OR gate 24.

### (2-3) Effect of second embodiment

Since the MPU 40 performs various types of processing when the power is applied, a time period is required to set the pulse width of the set width pulse signal P3. Even in such a case, the duty ratio of the PWM pulse signal P4a is forcedly set to 100 % in a predetermined time period elapsed from the time when the power is applied in the present embodiment.

Therefore, the pulse width of the PWM pulse signal P4a fed to the inverter circuit 30 is prevented from being smaller than the minimum PWM pulse width. As a result, the inverter circuit 30 can be operated in a stable state without being shut down in a simple configuration.

### (3) Third Embodiment

### (3-1) Configuration of backlight control device

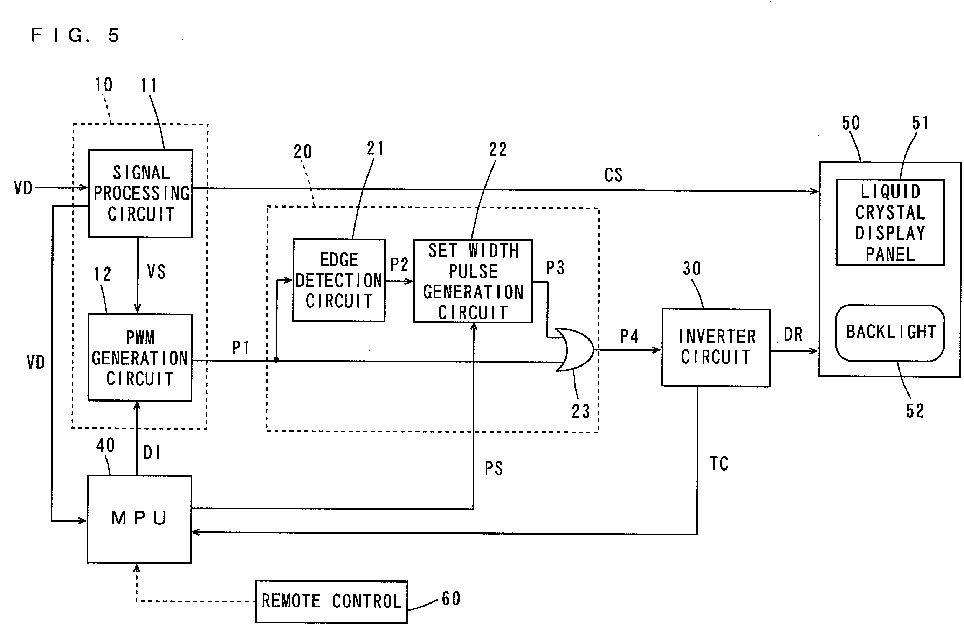

Fig. 5 is a block diagram showing the configuration of a display apparatus including a backlight control device according to a third embodiment of the present invention.

The backlight control device shown in Fig. 5 differs from the backlight control device shown in Fig. 1 in the following points. An inverter circuit 30 outputs a tube current detected value TC, described later. An MPU 40 feeds a pulse width set signal PS to a set width pulse generation circuit 22 on the basis of the tube current detected value TC outputted from the inverter circuit 30.

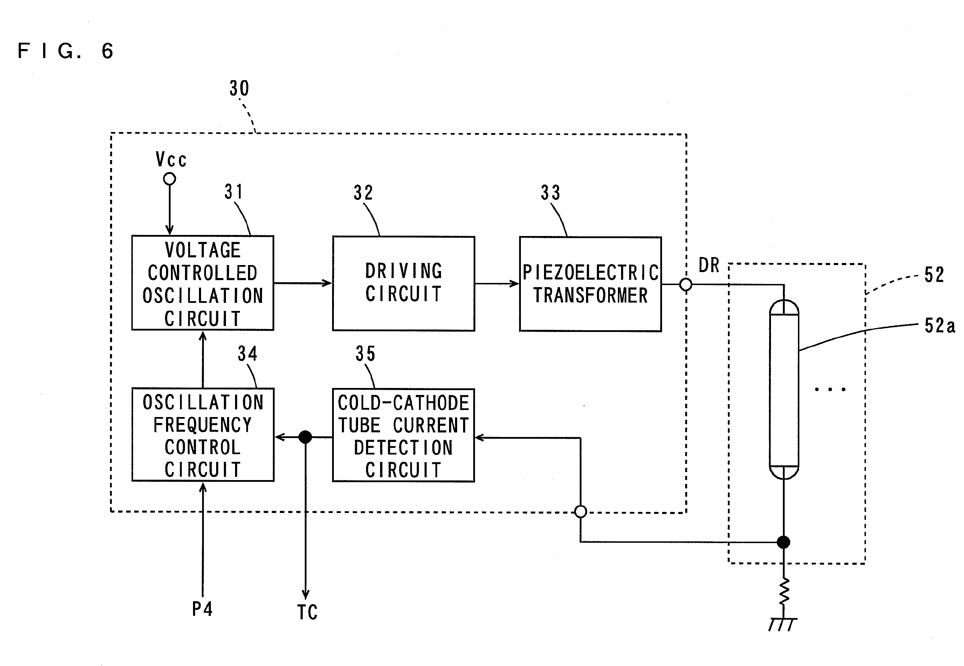

Fig. 6 is a block diagram showing an example of the configuration of the inverter circuit 30. The inverter circuit 30 includes a voltage controlled oscillation circuit 31, a driving circuit 32, a piezoelectric transformer 33, an oscillation frequency control circuit 34, and a cold-cathode tube current detection circuit 35. Although a backlight 52 includes a plurality of cold-cathode tubes 52a, only one cold-cathode tube 52a is illustrated in Fig. 6.

The oscillation frequency control circuit 34 controls the oscillation frequency of the voltage controlled oscillation circuit 31 on the basis of a PWM pulse signal P4 and the tube current detected value TC outputted from the cold-cathode tube current detection circuit 35, described later. The voltage controlled oscillation circuit 31 outputs an oscillation signal having a controlled oscillation frequency. The driving circuit 32 feeds a driving voltage corresponding to the oscillation signal outputted from the voltage controlled oscillation circuit 31 to a primary terminal of the piezoelectric transformer 33. An output voltage at a secondary terminal of the piezoelectric transformer 33 is applied to the cold-cathode tube 52a in the backlight 52 as a driving signal DR.

The cold-cathode tube current detection circuit 35 detects a current (tube current) flowing through the cold-cathode tube 52a in the backlight 52, and outputs the tube current detected value TC representing the value of the tube current.

The oscillation frequency of the voltage controlled oscillation circuit 31 is subjected to feedback control so as to come closer to the resonance frequency of the piezoelectric transformer 33, so that the set-up ratio of the piezoelectric transformer 33 rises, and the cold-cathode tube 52a starts to be discharged. As a result, the tube current in the cold-cathode tube 52a rapidly increases. In such a way, the oscillation frequency of the voltage controlled oscillation circuit 31 is controlled to the resonance frequency of the piezoelectric transformer 33, and the light emission of the cold-cathode tube 52a is stabilized.

In this inverter circuit 30, the oscillation frequency control circuit 34 operates the voltage controlled oscillation circuit 31 in a time period during which the PWM pulse signal P4 is turned on (e.g. , a time period during which it is at a high level),whilestopping the voltage controlled oscillation circuit 31 in a time period during which the PWM pulse signal P4 is turned off (e.g., a time period during which it is at a low level). This causes the light emission of the cold-cathode tube 52a to be turned on and off. Therefore, the luminance of the backlight 52 changes depending on the duty ratio of the PWM pulse signal P4.

In the inverter circuit 30 according to the present embodiment, the minimum PWM pulse width changes depending on the tube current detected value TC. Specifically, the minimum PWM pulse width decreases when the tube current detected value TC decreases, while increasing when the tube current detected value TC increases.

### (3-2) Operation of backlight control device

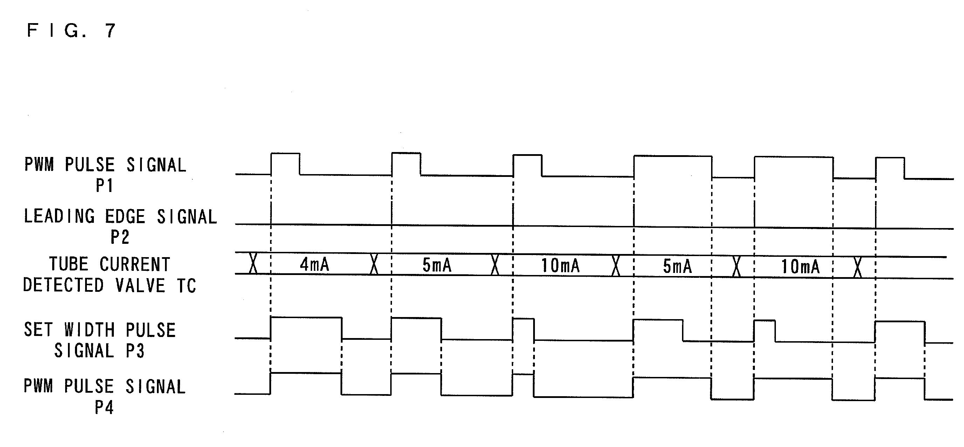

Fig. 7 is a timing chart of respective signals in units in the backlight control device shown in Fig. 5. Fig. 7 shows a PWM pulse signal P1, a leading edge signal P2, the tube current detected value TC, a set width pulse signal P3, and the PWM pulse signal P4. The horizontal axis shown in Fig. 7 indicates time.

In Fig. 7, the PWM pulse signal P1, the leading edge signal P2, the set width pulse signal P3, and the PWM pulse signal P4 are respectively the same as the corresponding signals shown in Fig. 2. The pulse width of the set width pulse signal P3 changes on the basis of the pulse width set signal PS fed from the MPU 40.

The MPU 40 calculates the minimum PWM pulse width depending on the tube current detected value TC outputted from the inverter circuit 30, and sets the pulse width of the set width pulse signal P3 to the minimum PWM pulse width.

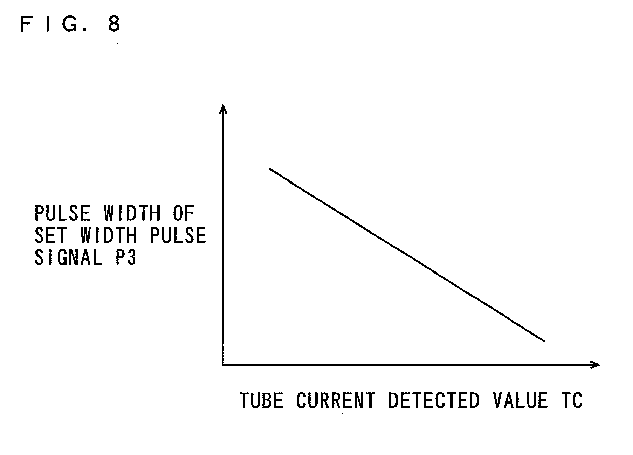

Fig. 8 is a diagram showing the relationship between the tube current detected value TC and the pulse width of the set width pulse signal P3.

As shown in Fig. 8, the MPU 40 controls the set width pulse generation circuit 22 such that the pulse width of the set width pulse signal P3 increases when the tube current detected value TC outputted from the inverter circuit 30 decreases. Conversely, the MPU 40 controls the set width pulse generation circuit 22 such that the pulse width of the set width pulse signal P3 decreases when the tube current detected value TC outputted from the inverter circuit 30 increases.

This causes the pulse width and the duty ratio of the PWM pulse signal P4 to be controlled depending on the tube current detected value TC outputted from the inverter circuit 30.

### (3-3) Effect of third embodiment

In the present embodiment, even when the minimum PWM pulse width of the inverter circuit 30 changes depending on the tube current detected value TC outputted from the inverter circuit 30, the PWM pulse signal P4 having the most suitable pulse width that is more than the minimum PWM pulse width and having the most suitable duty ratio that is more than the minimum duty ratio is always fed to the inverter circuit 30.

Therefore, the inverter circuit 30 can be operated in a stable state without being shut down in a simple configuration.

### (4) Fourth Embodiment

### (4-1) Configuration and operation of backlight control device

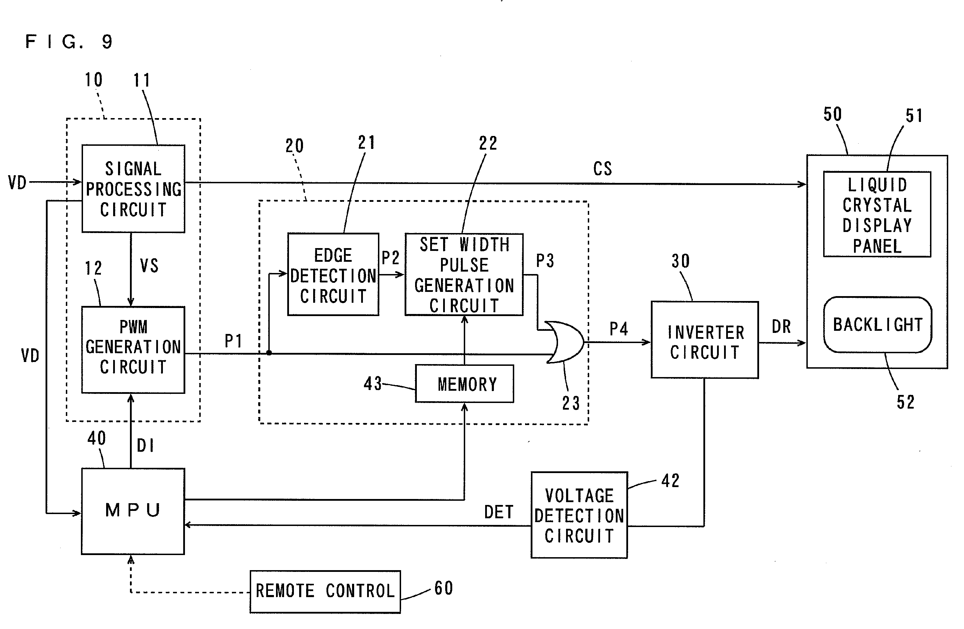

Fig. 9 is a block diagram showing the configuration of a display apparatus including a backlight control device according to a fourth embodiment of the present invention.

The backlight control device shown in Fig. 9 differs from the backlight control device shown in Fig. 1 in that it further includes an MPU 40, a voltage detection circuit 42, and a memory 43.

The voltage detection circuit 42 detects a voltage in an inverter circuit 30, and outputs a detection signal DET indicating whether or not the detected voltage is made lower than a predetermined threshold value. When the detected voltage is made lower than the threshold value, for example, the detection signal DET enters a low level. The voltage detected by the voltage detection circuit 42 may be a voltage outputted from a driving circuit 32 or a piezoelectric transformer 33 in the inverter circuit 30 shown in Fig. 6.

The memory 43 stores the most suitable minimum PWM pulse width. A set width pulse signal P3 from a set width pulse generation circuit 22 is controlled such that the pulse width thereof coincides with the minimum PWM pulse width stored in the memory 43.

The MPU 40 updates the minimum PWM pulse width stored in the memory 43 to the most suitable value on the basis of the detection signal DET outputted from the voltage detection circuit 42.

### (4-2) Operation of backlight control device

The inverter circuit 30 is automatically shut down when the pulse width of the PWM pulse signal P4 becomes smaller than the minimum PWM pulse width. This causes a voltage in each of the units in the inverter circuit 30 to be reduced to zero. Here, there is a variation (an individual difference) among the minimum PWM pulse widths of inverter circuits 30.

At the time of adjustment in a factory, the MPU 40 first causes the memory 43 to store a pulse width corresponding to a duty ratio of 100 % as an initial value of the minimum PWM pulse width. Thus, the duty ratio of the set width pulse signal P3 generated by the set width pulse generation circuit 22 becomes 100 %.

The MPU 40 gradually reduces the minimum PWM pulse width stored in the memory 43, and holds the minimum PWM pulse width in a case where the detection signal DET fed from the voltage detection circuit 42 indicates the reduction in the voltage. Note that it is preferable that a margin is added to the minimum PWM pulse width held in the memory 43 in consideration of variations in environmental conditions such as an ambient temperature.

Thereafter, when a user employs the backlight control device, the pulse width of the set width pulse signal P3 generated by the set width pulse generation circuit 22 is set to the minimum PWM pulse width held in the memory 43.

### (4-3) Effect of fourth embodiment

In the present embodiment, even when there is a variation (an individual difference) among the minimum PWM pulse widths of inverter circuits 30, the PWM pulse signal P4 having a pulse width that is more than the minimum PWM pulse width and is the smallest and having a duty ratio that is more than the minimum duty ratio and is the smallest is fed for each of the inverter circuits 30. Thus, a variable range of the luminance can be made wider without depending on a variation (an individual difference) among the characteristics of the inverter circuits 30. Therefore, the inverter circuit 30 can be operated in a stable state without being shut down in a simple configuration, and the luminance of a backlight 52 can be adjusted in a wide range.

### (5) Correspondences between constituent elements in the claims and parts in embodiments

In the following paragraphs, non-limiting examples of correspondences between various elements recited in the claims below and those described above with respect to various preferred embodiments of the present invention are explained.

In the preferred embodiments described above, the inverter circuit 30 is an example of an inverter, the PWM generation circuit 12 is an example of a first pulse generator, the duty ratio control circuit 20 is an example of a dimming pulse generator, and the set width pulse generation circuit 22 is an example of a second pulse generator.

The OR gate 23 is an example of a logical circuit or a first logical circuit, the edge detection circuit 21 is an example of an edge detector, the MPU 40 is an example of a controller, the expanded pulse generation circuit 25 is an example of a third pulse generator, the OR gate 24 is an example of a second logical circuit, the memory 43 is an example of a storage, and the voltage detection circuit 42 is an example of a voltage detector.

Furthermore, the PWM pulse signals P4 and P4a are examples of a dimming pulse signal, the PWM pulse signal P1 is an example of a first pulse signal, the minimum PWM pulse width is an example of a minimum pulse width, and the expanded pulse signal P5 is an example of an expanded pulse signal.

As each of various elements recited in the claims, various other elements having configurations or functions described in the claims can be also used.

### (6) Other Embodiments

Although in the above-mentioned embodiments, the OR gate 23 is used as the first logical circuit and the OR gate 24 is used as the second logical circuit, the present invention is not limited to the same. For example, a NOR gate may be used as the first logical circuit, and a NOR gate may be used as the second logical element.

A part or the whole of the liquid crystal control circuit 10 may be realized by a CPU (Central Processing Unit) and a program.

Furthermore, a part of the whole of the duty control circuit 20 may be realized by a CPU and a program.

### [Industrial Applicability]

The backlight control device according to the present invention is useful for backlight dimming and particularly, burst dimming in display apparatuses such as liquid crystal televisions and liquid crystal display apparatuses.

## Claims

1. A back light control device that controls the luminance of a backlight, comprising:
an inverter that drives said backlight in response to a dimming pulse signal;
a first pulse generator that generates a first pulse signal having a variable duty ratio to control the luminance of said backlight; and
a dimming pulse generator that outputs said dimming pulse signal to said inverter on the basis of a first pulse signal generated by said first pulse generator,
wherein said inverter is operable when said dimming pulse signal has a pulse width that is not less than a predetermined minimum pulse width, and
said dimming pulse generator outputs the first pulse signal generated by said first pulse generator as said dimming pulse signal to said inverter when the pulse width of the first pulse signal generated by said first pulse generator is not less than said minimum pulse width, while outputting a second pulse signal having a pulse width that is not less than said minimum pulse width as said dimming pulse signal to said inverter when the pulse width of the first pulse signal generated by said first pulse generator is less than said minimum pulse width.

2. The backlight control device according to claim 1, wherein
said dimming pulse generator includes
a second pulse generator that generates said second pulse signal in response to the first pulse signal generated by said first pulse generator, and
a logical circuit that outputs the first pulse signal generated by said first pulse generator as said dimming pulse signal to said inverter when the pulse width of the first pulse signal generated by said first pulse generator is not less than said minimum pulse width, while outputting the second pulse signal generated by said second pulse generator as said dimming pulse signal to said inverter when the pulse width of the first pulse signal generated by said first pulse generator is less than said minimum pulse width.

3. The backlight control device according to claim 2, wherein
said second pulse generator further includes
an edge detector that detects an edge of the first pulse signal generated by said first pulse generator, and
said second pulse generator generates said second pulse signal in response to the detection by said edge detector.

4. The backlight control device according to claim 1, wherein said dimming pulse generator outputs a signal having a duty ratio of 100 % as said dimming pulse signal to said inverter within a predetermined time period elapsed from the time when the power is applied.

5. The backlight control device according to claim 4, further comprising
a controller that controls ON/OFF of the supply of the power to said inverter,
wherein said dimming pulse generator includes
a second pulse generator that generates a second pulse signal having a pulse width that is not less than said minimum pulse width in response to the first pulse signal generated by said first pulse generator,
a first logical circuit that outputs the first pulse signal generated by said first pulse generator when the pulse width of the first pulse signal generated by said first pulse generator is not less than said minimum pulse width, while outputting the second pulse signal generated by said second pulse generator when the pulse width of the first pulse signal generated by said first pulse generator is less than said minimum pulse width,
a third pulse generator that generates an expanded pulse signal having a duty ratio of 100 % within a predetermined time period elapsed from the time when said controller turns the supply of the power on, and
a second logical circuit that outputs the expanded pulse signal generated by said third pulse generator as said dimming pulse signal to said inverter within said predetermined time period, while outputting an output signal of said first logical circuit as said dimming pulse signal to said inverter after an elapse of said predetermined time period.

6. The backlight control device according to claim 1, wherein said backlight includes a cold-cathode tube,
further comprising a controller that controls the pulse width of said second pulse signal generated by said dimming pulse generator on the basis of a current in said cold-cathode tube in said backlight.

7. The backlight control device according to claim 6, wherein
said dimming pulse generator includes
a second pulse generator that generates said second pulse signal in response to the first pulse signal generated by said first pulse generator, and
a logical circuit that outputs the first pulse signal generated by said first pulse generator as said dimming pulse signal to said inverter when the pulse width of the first pulse signal generated by said first pulse generator is not less than saidminimumpulsewidth, while outputting the second pulse signal generated by said second pulse generator as said dimming pulse signal to said inverter when the pulse width of the first pulse signal generated by said first pulse generator is less than said minimum pulse width,
wherein said controller controls the pulse width of said second pulse signal generated by said second pulse generator on the basis of the current in said cold-cathode tube in said backlight.

8. The backlight control device according to claim 1, further comprising
a storage that stores the minimum pulse width, and
a controller that gradually reduces the duty ratio of the dimming pulse signal generated by said dimming pulse generator, and causes said storage to store as said minimum pulse width a pulse width corresponding to a duty ratio that is larger by a predetermined value than a duty ratio in a case where said inverter is shut down,
wherein said dimming pulse generator outputs said second pulse signal having the minimum pulse width stored in said storage as said dimming pulse signal when the pulse width of the first pulse signal generated by said first pulse generator is less than said minimum pulse width.

9. The backlight control device according to claim 8, further comprising
a voltage detector that detects a voltage in said inverter,
wherein said controller causes said storage to store as said minimum pulse width a pulse width corresponding to a duty ratio that is larger by a predetermined value than a duty ratio in a case where said voltage detector detects the reduction in the voltage, and
said dimming pulse generator includes
a second pulse generator that generates said second pulse signal having the minimum pulse width stored in said storage in response to the first pulse signal generated by said first pulse generator, and
a logical circuit that outputs the first pulse signal generated by said first pulse generator as said dimming pulse signal to said inverter when the pulse width of the first pulse signal generated by said first pulse generator is not less than said minimum pulse width, while outputting the second pulse signal generated by said second pulse generator as said dimming pulse signal to said inverter when the pulse width of the first pulse signal generated by said first pulse generator is less than said minimum pulse width.

10. A display apparatus comprising:
a signal processing circuit that converts an inputted video signal into a predetermined format;
a display panel that displays as an image a video signal obtained by said signal processing circuit;
a backlight provided on a back of said display panel; and
a backlight control device that controls the luminance of said backlight,
wherein said backlight control device includes
an inverter that drives said backlight in response to a dimming pulse signal;
a first pulse generator that generates a first pulse signal having a variable duty ratio to control the luminance of said backlight; and
a dimming pulse generator that outputs said dimming pulse signal to said inverter on the basis of the first pulse signal generated by said first pulse generator,
said inverter is operable when said dimming pulse signal has a pulse width that is not less than a predetermined minimum pulse width, and
said dimming pulse generator outputs the first pulse signal generated by said first pulse generator as said dimming pulse signal to said inverter when the pulse width of the first pulse signal generated by said first pulse generator is not less than said minimum pulse width, while outputting a second pulse signal having a pulse width that is not less than said minimum pulse width as said dimming pulse signal to said inverter when the pulse width of the first pulse signal generated by said first pulse generator is less than said minimum pulse width.

11. The display apparatus according to claim 10, wherein said display panel includes a liquid crystal display panel.
